# EUROPÄISCHE PATENTSCHRIFT

(11) **EP 0 573 773 B1**
(45) Veröffentlichungstag und Bekanntmachung des Hinweises auf die Patenterteilung: **31.07.1996**
(21) Anmeldenummer: 93107135.1
(22) Anmeldetag: 03.05.1993
(51) Int. Cl.: G02B 21/02, G02B 13/14

(54) **Verfahren zur Herstellung von UV-Mikroskop - Trockenobjektiven und nach diesem Verfahren hergestellte Mikroskopobjektive**
Method of manufacturing UV-microscope lens of the dry type and microscope lenses manufactured by this method
Procédé de fabrication d'un objectif pour un microscope en UV à sec et d'un objectif pour un microscope fabriqué selon ce procédé

(30) Priorität: 12.06.1992 DE 4219205
(43) Veröffentlichungstag der Anmeldung: 15.12.1993
(73) Patentinhaber: LEICA MIKROSKOPIE UND SYSTEME GmbH, D-35530 Wetzlar (DE)
(72) Erfinder: Vollrath, Wolfgang, W-5909 Burbach-Oberdresselndorf (DE)
(74) Vertreter: Stamer, Harald, Dipl.-Phys.

(56) Entgegenhaltungen:
- DE-A- 3 915 868

## Beschreibung

Die Erfindung betrifft ein Verfahren zur Herstellung von UV - Mikroskop - Trockenobjektiven gemäß Anspruch 1 und nach diesem Verfahren hergestellte Mikroskopobjektive gemäß den Ansprüchen 2 und 3.

Aus der DE 39 15 868 A1 ist ein UV-taugliches Trockenobjektiv mit einer Apertur größer als 0,70 und einem Abbildungsmaßstab von mindestens 60 x bekannt, das bezüglich des Öffnungsfehlers für den sichtbaren Spektralbereich und außerdem für eine ausgewählte UV - Wellenlänge korrigiert ist. Die Korrektion der Spektralbereiche ist nicht simultan erfüllt:
Das Objektiv besteht aus wenigstens 11 Linsen mit mindestens zwei gegeneinander verschiebbaren Linsengliedern,deren Abstand zueinander bestimmt, für welche Wellenlänge das Objektiv verwendet werden kann. Dieser Abstand ist an der äußeren Objektivfassung einstellbar, was eine entsprechend aufgebaute mechanische Fassung voraussetzt. Eine bei dieser axialen Bewegung auftretende, auch nur geringfügige radiale Verschiebung erzeugt einen asymmetrischen Abbildungsfehler (Koma) über das gesamte Bildfeld. Aus diesem Grund sind die Anforderungen an die Präzision bei der Herstellung dieses bekannten Objektivs sehr hoch. Für die jeweils eingestellte Wellenlänge im UV ist nur der Öffnungsfehler korrigiert, nicht jedoch die Aberrationen für ein größeres Bildfeld.

Da in vielen Fällen eine Adaptierbarkeit des Objektivs auf eine andere Wellenlänge durch den Anwender nicht erforderlich ist, liegt der Erfindung die Aufgabe zugrunde, UV - Mikroskopobjektive mit verhältnismäßig einfachem optischen Aufbau in einem Baukastensystem zu schaffen,deren Bildfehler für die Bildmitte und das Bildfeld primär für eine UV - Wellenlänge korrigiert sind und bei denen durch einfache Maßnahmen bei der Herstellung eine Adaption auf andere Wellenlängen vornehmbar ist.

Diese Aufgabe wird erfindungsgemäß durch ein Herstellungsverfahren mit den im gekennzeichneten Teil des Anspruchs 1 angegebenen Merkmalen gelöst. Ausführungsbeispiele für danach hergestellte Mikroskopobjektive mit entsprechenden Datensätzen sind Gegenstand der Ansprüche 2 und 3.

Durch die immer breitere verfügbarkeit und Anwendung von Excimer - Lasern und anderen im kurzwelligen UV emittierenden Lasern mit Wellenlängen zwischen 190 nm und 350 nm besteht ein zunehmender Bedarf an beugungsbegrenzt korrigierten abbildenden Systemen für diesen Spektralbereich (im folgenden DUV genannt). Da nur eine sehr geringe Zahl im DUV verwendbarer optischer Materialien existiert und zudem im DUV die Brechzahl sehr stark von der Wellenlänge abhängt, ist eine Korrektion der Farbfelder über das gesamte DUV oder auch nur ein nennenswertes Teilspektrum davon nicht möglich. Insbesondere für Wellenlängen unter 300 nm lassen sich in der Regel nur Monochromate oder Quasi-Monochromate mit einer spektralen Bandbreite von größenordnungsmäßig +/- 1nm realisieren. Beim Arbeiten mit nur einer diskreten Wellenlänge ist dies nicht notwendigerweise nachteilig. Für die Herstellung solcher Systeme bedeutet das jedoch, daß für die Vielzahl der Wellenlängen jeweils speziell optimierte Systeme entwickelt und gefertigt werden müssen. Dies bezieht sich nicht nur auf die unterschiedlichen Wellenlängen, sondern auch auf die verschiedenen Anwendungskategorien. So werden beispielsweise bei der Materialbearbeitung mit Excimer-Lasern eher Objektive mit großem freiem Arbeitsabstand und kleiner bis mittlerer Apertur notwendig sein, wohingegen für die Erzeugung kleinster Strukturen im sub-Mikrometer Bereich durch fotolithographische Prozesse oder für die Vermessung solcher Strukturen vorzugsweise Objektive mit hoher und höchster Apertur (und zwangsläufig kleinem freien Arbeitsabstand) erforderlich sind. Daraus resultiert eine Objektiv-Vielfalt mit entsprechend hohen Herstellkosten.

Das erfindungsmäßige Herstellverfahren benutzt eine Art Baukastensystem, wobei von einem Grundobjektiv ausgegangen wird, das primär für eine einzelne Wellenlänge korrigiert ist und bei derselben eine bestimmte Brennweite sowie Apertur aufweist. Für eine Reihe von Anwendungen eines derartigen Objektves ist es dabei völlig ausreichend, wenn die tatsächliche Brennweite in der Nähe der nominellen Brennweite liegt und die Apertur hinreichend groß ist. Bei beugungsbegrenzter Abbildung ist beispielsweise bei einer Wellenlänge von 325 nm und einer Apertur von 0,90 das gleiche Auflösungsvermögen wie bei 248 nm und einer Apertur von 0,70 erzielbar: In beiden Fällen beträgt der Radius des Beugungsscheibchens 0,22 Mikrometer, sodaß gleichermaßen jeweils Anwendungen im tiefen sub-Mikrometer-Bereich möglich sind.

Das erfindungsgemäße Herstellverfahren für UV - Mikroskopobjektive nutzt nun diese Freiheitsgrade bezüglich Brennweite und Apertur aus, um allein durch Abstandsänderungen und Dickenänderungen gegebenenfalls nur einer Linse im Rahmen großzügig bemessener Dickentoleranzen - beispielsweise von +/- 0,2 mm - die Bildfehlerkorrektion in Bildmitte und Bildfeld auf andere Wellenlängen zu übertragen. Da sich die zulässige Dickenänderung nur im Rahmen von Fertigungstoleranzen bewegen soll, ist eine spezielle Fertigung von Linsen mit bestimmten wellenlängenspezifischen Dicken nicht erforderlich; vielmehr können im Rahmen der Fertigungsstatistik die Linsen mit den erforderlichen Dicken ausgesucht und den Objektiven für die entsprechende Wellenlänge zugeordnet werden. Die notwendige wellenlängen-spezifische Apertur wird durch den freien Durchmesser eines entsprechenden Fassungsteils definiert.

In der Zeichnung sind nach dem erfindungsgemäßen Verfahren hergestellte UV - Mikroskop - Trockenobjektive dargestellt.

Es zeigen:
- Fig. 1a: einen Linsenschnitt durch ein Grundobjektiv gemäß der Erfindung,

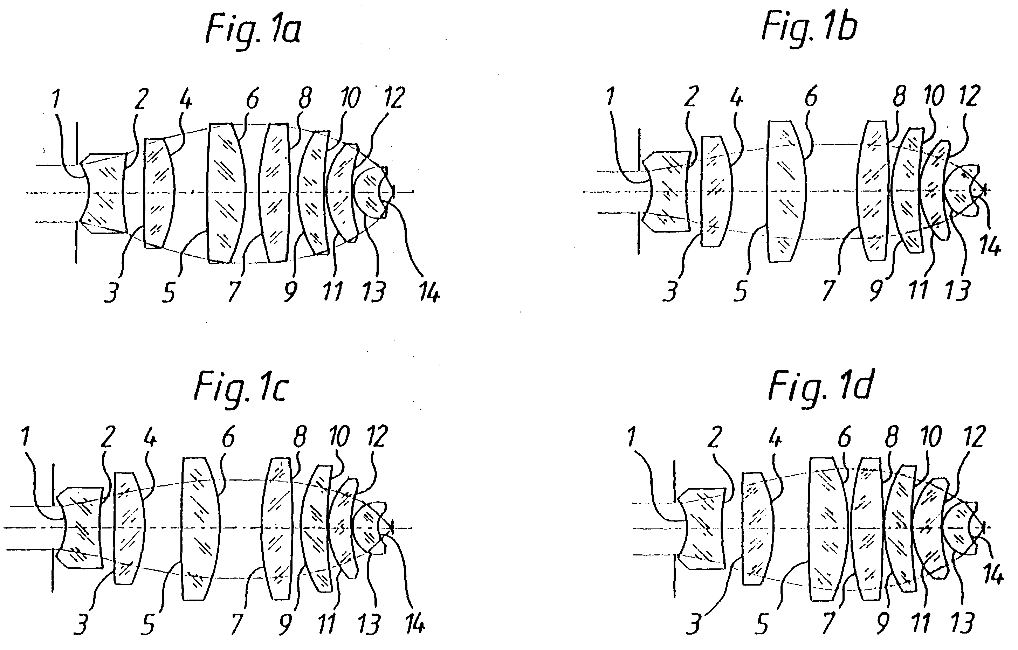

- Fig. 1b-d: Linsenschnitte von drei Ausführungsbeispielen, die vom Grundobjektiv abgeleitet sind,

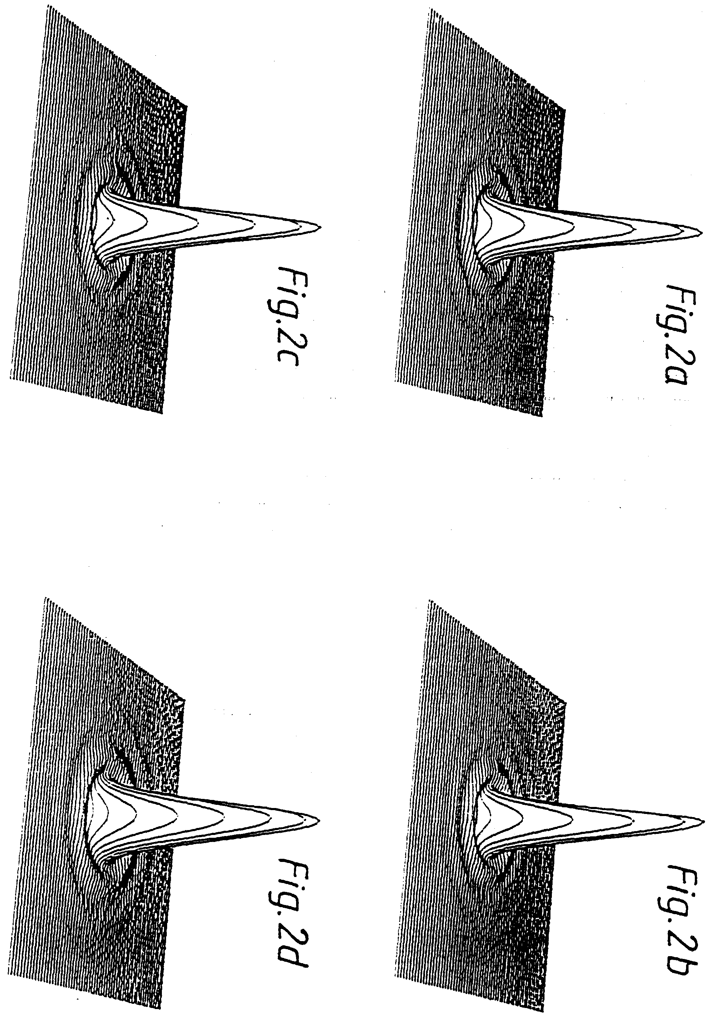

- Fig. 2a-d: die beugungsoptischen Punktbildfunktionen der Objektive gemäß Fig. 1a-d für die Bildmitte (x=0) und

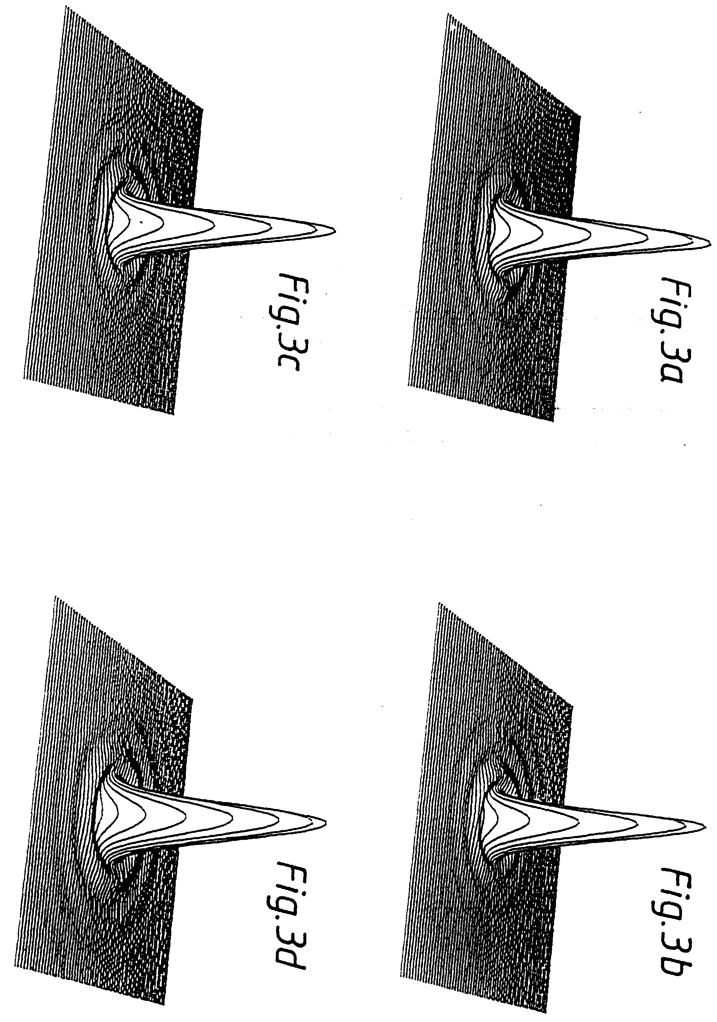

- Fig. 3a-d: die beugungsoptischen Punktbildfunktionen der Objektive gemäß Fig. 1a-d für eine Bildhöhe x=0,05 mm.

Nachstehend sind neben dem Grundobjektiv (A) für 325 nm drei Objektive (B,C,D) aufgeführt, die sich auf die beschriebene Art davon ableiten lassen:

| | Wellenlänge (nm) | Brennweite (nm) | Apertur | SDH (0) | SDH (0,05) |
|---|---|---|---|---|---|
| A | 325 | 2,50 | 0,90 | 0,997 | 0,907 |
| B | 248 | 2,35 | 0,70 | 0,992 | 0,972 |
| C | 257 | 2,39 | 0,70 | 0,990 | 0,979 |
| D | 355 | 2,49 | 0,80 | 0,997 | 0,963 |

Darin bezeichnet SDH (x) die Strehlsche Definitionshelligkeit für die Höhe x (mm) im Objektiv, wobei SDH maximal den Wert 1 annehmen kann und für ein beugungsbegrenzt korrigiertes optisches System mindestens 0,8 betragen muß.

Die vier Objektive A,B,C,D weisen folgende Daten auf:

| Fl.Nr. | Radius (mm) | Dicke/Abstand (mm) | | | |
|---|---|---|---|---|---|
| | | A | B | C | D |
| 1 | - 3.687 | 2.70 | -.- | -.- | -.- |
| 2 | 14.488 | 1.70 | 1.20 | 1.23 | 1.64 |
| 3 | 178.371 | 2.45 | -.- | -.- | -.- |
| 4 | -10.002 | 2.62 | 2.71 | 2.93 | 2.75 |
| 5 | 87.083 | 3.10 | -.- | -.- | -.- |
| 6 | -12.987 | 1.05 | 3.97 | 3.30 | 0.20 |
| 7 | 17.406 | 2.50 | -.- | -.- | -.- |
| 8 | -63.274 | 0.60 | 0.21 | 0.63 | 0.10 |
| 9 | 9.119 | 2.10 | -.- | -.- | -.- |
| 10 | 27.449 | 0.20 | 0.10 | 0.11 | 0.10 |
| 11 | 5.408 | 2.00 | 1.80 | 1.81 | 2.20 |
| 12 | 9.824 | 0.15 | 0.10 | 0.11 | 0.17 |
| 13 | 2.040 | 2.03 | -.- | -.- | -.- |
| 14 | 1.714 | -.- | -.- | -.- | -.- |

Das erfindungsgemäße Herstellungsverfahren ist nicht auf die nur beispielhaft angegebenen Objektive und deren Daten beschränkt, sondern auf alle bei Objektiven für die klassische Mikroskopie üblichen Brennweiten/Apertur - Kombinationen übertragbar. Mit einer Tubuslinse der Brennweite 250 mm entspricht der Objekthöhe x=0,05 mm ein Zwischenbilddurchmesser von 10 mm. Für Anwendungen, bei denen dieser relativ große Zwischenbilddurchmesser nicht notwendig ist, kann die Korrektion der Koma so auf entsprechende kleinere Durchmesser beschränkt und der Öffnungsfehler über eine größere Apertur korrigiert werden. Aus dem Objektiv C mit 257 nm und 0,70 Apertur entsteht auf diese Weise ein Objektiv E mit folgenden Daten:

| Fl.Nr. | Radius | Dicke/Abstand |
|---|---|---|
| 2 | 14,488 | 1,28 |
| 4 | -10,002 | 3,02 |
| 6 | -12,987 | 4,96 |
| 8 | -63,274 | 0,92 |
| 10 | 27,449 | 0,10 |
| 11 | 5,408 | 1,80 |
| 12 | 9,824 | 0,10 |

Für SDH (0) und SDH (0,05) erhält man hier 0,984 und 0,970.

## Patentansprüche

1. Verfahren zur Herstellung von quasi-monochromatischen Mikroskop-Trockenobjektiven für einen Wellenlängenbereich von 190 bis 360 nm, das folgende Schritte aufweist:
Entwerfen eines Grundobjektivs (A), korrigiert für Bildfehler in Bildmitte und -feld für eine bestimmte Wellenlänge in Bereich von 190 bis 360 nm;
ausgehend von dem Entwurf des Grundobjektivs (A) Entwerfen einer bestimmten Anzahl von Objektiven (B,C,D) mit gleicher Linsenzahl wie das Grundobjektiv und mit im wesentlichen gleichem Auflösungsvermögen für ausgewählte Wellenlängen im Bereich von 190 bis 360 nm, wobei die Luftabstände (2,4,6,8,10,12) verändert werden;
Auswählen eines der entworfenen Objektive (A,B,C,D) in Abhängigkeit von der Wellenlänge, bei der das Trockenobjektiv betrieben werden soll;
Herstellen des gewählten Objektivs,
dadurch gekennzeichnet, daß beim Entwurf der bestimmten Anzahl von Objektiven (B,C,D) zusätzlich zu den Luftabständen nur noch die Linsendicke (11) verändert wird.

2. Verfahren nach Anspruch 1, dadurch gekennzeichnet, daß das Grundobjektiv (A) 7 Linsen (1,3,5,7,9,11,13) mit folgenden Daten aufweist:
Wellenlänge (nm): 325; Brennweite (mm): 2,50
Apertur : 0,90; SDH(o) : 0,997
SDH (0,05) : 0,907;
| Fl.Nr. | Radius (mm) | Dicke/Abstand (mm) |
|---|---|---|
| | | A |
| 1 | - 3.687 | 2.70 |
| 2 | 14.488 | 1.70 |
| 3 | 178.371 | 2.45 |
| 4 | -10.002 | 2.62 |
| 5 | 87.083 | 3.10 |
| 6 | -12.987 | 1.05 |
| 7 | 17.406 | 2.50 |
| 8 | -63.274 | 0.60 |
| 9 | 9.119 | 2.10 |
| 10 | 27.449 | 0.20 |
| 11 | 5.408 | 2.00 |
| 12 | 9.824 | 0.15 |
| 13 | 2.040 | 2.03 |
| 14 | 1.714 | -.- |
wobei SDH (x) die Strehlsche Definitionshelligkeit für die Höhe x (in mm) im Objekt bedeutet und die Linsen (1,3,5,7,9,11,13) aus Quarzglas gefertigt sind.

3. Verfahren nach Anspruch 1, dadurch gekennzeichnet, daß die vom Grundobjektiv (A) abgeleiteten Objektive (B,C,D) folgende Daten aufweisen:
| | B | C | D |
|---|---|---|---|
| Wellenlänge (nm) | 248 | 257 | 355 |
| Brennweite (mm) | 2,35 | 2,39 | 2,49 |
| Apertur | 0,70 | 0,70 | 0,80 |
| SDH(0) | 0,992 | 0,990 | 0,997 |
| SDH(0,05) | 0,972 | 0,979 | 0,963 |
| Fl.Nr. | Radius (mm) | Dicke/Abstand (mm) | | |
|---|---|---|---|---|
| | | B | C | D |
| 1 | - 3.687 | -.- | -.- | -.- |
| 2 | 14.488 | 1.20 | 1.23 | 1.64 |
| 3 | 178.371 | -.- | -.- | -.- |
| 4 | -10.002 | 2.71 | 2.93 | 2.75 |
| 5 | 87.083 | -.- | -.- | -.- |
| 6 | -12.987 | 3.97 | 3.30 | 0.20 |
| 7 | 17.406 | -.- | -.- | -.- |
| 8 | -63.274 | 0.21 | 0.63 | 0.10 |
| 9 | 9.119 | -.- | -.- | -.- |
| 10 | 27.449 | 0.10 | 0.11 | 0.10 |
| 11 | 5.408 | 1.80 | 1.81 | 2.20 |
| 12 | 9.824 | 0.10 | 0.11 | 0.17 |
| 13 | 2.040 | -.- | -.- | -.- |
| 14 | 1.714 | -.- | -.- | -.- |

## Claims

1. Method for the production of quasi-monochromatic microscope objectives of the dry type for a wavelength range from 190 to 360 nanometres, which method comprises the following steps:
Designing a basic objective (A) corrected for image errors in the image centre and image field for a certain wavelength in the range from 190 to 360 nanometres;
starting out from the design of the basic objective (A), designing a certain number of objectives (B, C, D) with the same number of lenses as the basic objective and with substantially the same resolving power for selected wavelenghs in the range from 190 to 360 nanometres, wherein the air spacings (2, 4, 6, 8, 10, 12) are varied;
selecting one of the designed objectives (A, B, C, D) in dependence on the wavelength at which the dry objective is to be operated and producing the chosen objective,
characterised thereby, that for the design of the certain number of objectives (B, C, D), only the lens thickness (11) is still varied in addition to the air spacings.

2. Method according to claim 1, characterised thereby, that the basic objective (A) comprises 7 lenses (1, 3, 5, 7, 9, 11, 13) with the following data:
Wavelength (nanometres): 325; Focal length (millimetres): 2.50
Aperture : 0.90; SDH(o) : 0.997
SDH (0.05) : 0.907;
| Surface number | Radius (millimetres) | Thickness/spacing (millimetres) |
|---|---|---|
| | | A |
| 1 | - 3.687 | 2.70 |
| 2 | 14.488 | 1.70 |
| 3 | 178.371 | 2.45 |
| 4 | -10.002 | 2.62 |
| 5 | 87.083 | 3.10 |
| 6 | -12.987 | 1.05 |
| 7 | 17.406 | 2.50 |
| 8 | -63.274 | 0.60 |
| 9 | 9.119 | 2.10 |
| 10 | 27.449 | 0.20 |
| 11 | 5.408 | 2.00 |
| 12 | 9.824 | 0.15 |
| 13 | 2.040 | 2.03 |
| 14 | 1.714 | -.- |
wherein SDH(x) signifies the brightness by definition according to Strehl for the height x in millimetres in the object and the lenses (1, 3, 5, 7, 9, 11, 13) are made of quartz glass.

3. Method according to claims 1 and 2, characterised thereby, that the objectives (B, C, D) derived from the basic objective (A) display the following data:
| | B | C | D |
|---|---|---|---|
| Wavelength (nanometres) | 248 | 257 | 355 |
| Focal length (millimetres) | 2.35 | 2.39 | 2.49 |
| Aperture | 0.70 | 0.70 | 0.80 |
| SDH(0) | 0.992 | 0.990 | 0.997 |
| SDH(0.05) | 0.972 | 0.979 | 0.963 |
| Surface number | Radius (millimetres) | Thickness/spacing (millimetres) | | |
|---|---|---|---|---|
| | | B | C | D |
| 1 | - 3.687 | -.- | -.- | -.- |
| 2 | 14.488 | 1.20 | 1.23 | 1.64 |
| 3 | 178.371 | -.- | -.- | -.- |
| 4 | -10.002 | 2.71 | 2.93 | 2.75 |
| 5 | 87.083 | -.- | -.- | -.- |
| 6 | -12.987 | 3.97 | 3.30 | 0.20 |
| 7 | 17.406 | -.- | -.- | -.- |
| 8 | -63.274 | 0.21 | 0.63 | 0.10 |
| 9 | 9.119 | -.- | -.- | -.- |
| 10 | 27.449 | 0.10 | 0.11 | 0.10 |
| 11 | 5.408 | 1.80 | 1.81 | 2.20 |
| 12 | 9.824 | 0.10 | 0.11 | 0.17 |
| 13 | 2.040 | -.- | -.- | -.- |
| 14 | 1.714 | -.- | -.- | -.- |

## Revendications

1. Procédé de fabrication d'objectifs secs pour microscope quasi-monochromatiques pour un domaine de longueurs d'onde de 190 à 360 nm, qui comprend les opérations suivantes :
conception d'un objectif de base (A), corrigé pour des défauts d'image au centre d'image et dans le champ d'image pour une longueur d'onde prédéterminée dans le domaine de 190 à 360 nm ;
conception, à partir de la conception de l'objectif de base (A), d'un nombre prédéterminé d'objectifs (B,C,D) ayant le même nombre de lentilles que l'objectif de base et avec un pouvoir de résolution sensiblement identique pour des longueurs d'ondes sélectionnées dans le domaine de 190 à 360 nm, Les distances d'air (2,4,6,8,10,12) étant modifiées ;
sélection de l'un des objectifs conçus (A,B,C,D) en fonction de la longueur d'onde à laquelle l'objectif sec doit fonctionner ;
fabrication de l'objectif sélectionné,
caractérisé en ce que, lors de la conception du nombre prédéterminé d'objectifs (B,C,D), supplémentairement aux distances d'air, seulement l'épaisseur de lentille (11) est modifiée.

2. Procédé selon la revendication 1, caractérisé en ce que l'objectif de base (A) comprend 7 lentilles (1,3,5,7,9,11,13) ayant les données suivantes :
Longueur d'onde (nm) : 325; Distance Focale (mm) : 2,50
Ouverture : 0,90; SDH(o) : 0,997
SDH (0,05) : 0,907; 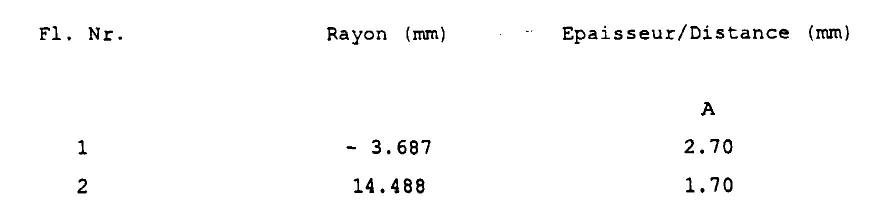 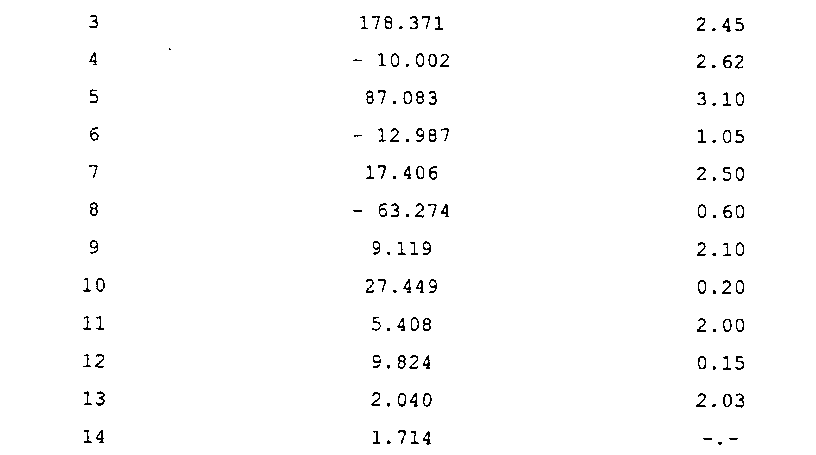 SDH (x) étant la luminosité de définition de Strehl pour la hauteur x (en mm) dans l'objectif et les lentilles (1,3,5,7,9,11,13) étant fabriquée en verre de quartz.

3. Procédé selon la revendication 1, caractérisé en ce que les objectifs (B,C,D) déduits de l'objectif de base (A) comprennent les données suivantes :
| | B | C | D |
|---|---|---|---|
| Longueur d'onde (nm) | 248 | 257 | 355 |
| Distance focale (mm) | 2,35 | 2,39 | 2,49 |
| Ouverture | 0,70 | 0,70 | 0,80 |
| SDH (0) | 0,992 | 0,990 | 0,997 |
| SDH (0,05) | 0,972 | 0,979 | 0,963 |
